# EUROPEAN PATENT APPLICATION

(11) **EP 4 029 635 A1**
(43) Date of publication of application: **20.07.2022**
(21) Application number: 21151986.3
(22) Date of filing: 18.01.2021
(51) Int. Cl.: B23B 13/12, B23B 13/08, B23B 13/02, B23Q 1/70

(54) **CENTERING DEVICE FOR BAR LOADERS FOR AUTOMATIC LATHES**

(71) Applicant: Cucchi BLT S.r.l., 20092 Cinisello Balsamo (MI) (IT)
(72) Inventor: BECCE, Gabriele, 20063 CERNUSCO SUL NAVIGLIO (MI) (IT); BILOTTI, Roberto, 26833 COMAZZO (LO) (IT); MANDELLI, Paolo, 20063 CERNUSCO SUL NAVIGLIO (MI) (IT); SCOTTI, Andrea Artiom, 20092 CINISELLO BALSAMO (MI) (IT)
(74) Representative: Frasson, Luca

(57) **Abstract**

The present invention relates to a centering device (1), particularly for automatic bar loaders for lathes, comprising a channel (3) developing along an axial direction (A), said channel (3) being intended for the passage of a bar (100) directed from a bar loader (101) to a lathe (103), and of the relative bar pusher (105), said centering device (1) comprising an inlet end (5) for said bar (100) and an outlet end (7) for said bar (100), opposite to said inlet end (5), said centering device (1) comprising at least two gripping bodies (9), each of said at least two gripping bodies (9) being housed in a tubular body (11) and being movable with respect to said tubular body (11) along an inclined sliding direction (S) both with respect to said axial direction (A) and with respect to a direction (R) that is radial to said channel (3), to define an adjustable opening for the passage of said bar (100) in said channel (3) .

According to the invention, each of said at least two gripping bodies (9) comprises a first face (90) adapted to engage with said bar (100) and a second face (92) radially opposite to said first face (90), each of said at least two gripping bodies (9) comprising a pin (94) projecting from said second face (92) along said inclined sliding direction (S), said tubular body (11) comprising at least two guide holes (110), each of said at least two guide holes (110) developing along said inclined sliding direction (S) and being configured to slidably house a pin (94) of a corresponding gripping body (9), said centering device (1) further comprising first elastic means (13) adapted to counteract the displacement of said at least two gripping bodies (9) toward said inlet end (5) and second elastic means (15) adapted to counteract the displacement of said at least two gripping bodies (9) toward said outlet end (7).

## Description

The present invention relates to a centering device of the type used in bar loaders for automatic lathes. The invention also relates to a bar loader for automatic lathes comprising such a centering device.

As is known, the machining of bars on the lathe, both single- and multi-spindle, is carried out using loaders that carry the bar inside the lathe.

In an automatic loader-lathe system the bar to be machined is generally supported at one end by the gripper of the loader and is transported, by means of a bar pusher that moves along a channel present in the loader, inside the gripper of the lathe.

During machining in the lathe, the bar is therefore constrained at two points, and is therefore free to oscillate over the whole length in the channel of the loader and in the buffer of the lathe.

In order to reduce these oscillations, so-called centering devices are associated with the bar, preferably close to the entry to the lathe spindle, which define a further centering and supporting point of the bar and therefore reduce the oscillation thereof. This stabilization of the bar allows to improve both the quality and the machining speed of the bar. In fact, the excessive oscillation of the bar, especially in the case of bars with a cross-section that is much smaller than the cross-section of the loader channel, generates vibrations which are transmitted to the lathe gripper with a consequent impact on the quality of the machining.

In order to reduce the lateral oscillations of the bar, the diameter of the channel of a centering device must be as small as possible with respect to the diameter of the bar, so as to leave the minimum lateral clearance between the bar and the channel. At the same time, during the transport of the bar from the loader to the lathe gripper, the centering device must also enable the passage of the pusher group, i.e. of the bar pusher and of the gripper of the loader, which pusher group has a diameter significantly greater than the diameter of the bar.

At present there are different types of centering devices which provide systems for allowing the bar pusher to pass.

For example, document WO2017/149449A1 describes a centering device having a pair of semi-cylindrical jaws which accommodate the bar and which can move radially away from each other to allow the bar pusher to pass through the centering device. The jaws comprise projecting sliders, which are movable inside channels that are present in a sleeve external to the jaws. These channels define a path of movement of the jaws which has both an axial component and a radial component. When a bar pusher, which has a larger diameter than the relative bar, is pushed axially against a pair of inclined faces of the jaws, said jaws move back axially and at the same time move away radially to allow the passage of the bar pusher.

Document WO2017/149446A1, on the other hand, describes a centering device which comprises a plurality of jaws constituted by cylinders which are radially movable inside respective seats obtained in the wall of a hollow cylindrical slider inside which the bar is housed. The hollow cylindrical slider is axially movable together with the cylindrical jaws that are housed therein. The cylindrical jaws have inclined faces turned towards the bar and inclined faces turned outwards, intended to engage with respective inclined cams obtained in a sleeve that is external to the aforesaid cylindrical slider. When a bar pusher is pushed against the inclined face of the cylindrical jaws, said bar pusher axially pushes the jaws, and with them also drags the hollow cylindrical slider, since the jaws cannot return inside their seats, due to the presence of said cams. The axial movement of the assembly of jaws and hollow cylindrical slider can continue until the cylindrical jaws, with their external inclined face, find the inclined stretch of the respective cams. Starting from that instant, the jaws are also allowed to move away from each other radially which allows the bar pusher to pass through the jaws.

Centering devices of the known type, among which those described above, are not free from drawbacks, including the fact that they tend in any case to oscillate together with the bar being machined, and therefore do not allow to dampen in an efficient manner all the vibrations.

Another drawback of known centering devices consists in the fact that they have significant limitations in being able to be used as a support of bars having cross-sections of different sizes and shapes, unless the centering device itself is disassembled and the jaws, like in the case of the device described in WO2017/149449A1, or the hollow cylindrical body, like in the case of the device described in WO2017/149446A1, are replaced.

A further drawback of such devices of the known type consists in the fact that the components in direct contact with the bar tend to wear frequently due to the present friction, and therefore need to be replaced frequently, with consequent long and frequent machine downtimes.

The task of the present invention consists in realising a centering device for bar loaders for automatic lathes which solves the above-mentioned technical problem, solves the drawbacks and overcomes the limits of the prior art, allowing to significantly reduce the vibrations of the bar during the machining thereof.

Within the scope of this task, an object of the present invention is to realise a centering device which can be used with a wide range of bars, different from one another both in terms of the shape and size of their cross-section.

Another object of the invention consists in realising a centering device which is able to adapt dynamically to the different machining conditions of the bar to be centered and to the different dimensional, geometrical and material characteristics of the bar to be machined, with no special interventions by an operator.

Another object of the invention consists in realising a centering device whose components that are subject to greater wear are easily and quickly replaceable.

Another object of the invention consists in realising a centering device which, despite ensuring an adequate grip of the bar, allows to limit the wear of the components in contact with the bar.

A further object of the invention consists in realising a centering device which is capable of giving the greatest assurances of reliability and safety in use.

Another object of the invention consists in realising a centering device which is easy to realise and economically competitive when compared to the prior art.

The above-mentioned task, as well as the objects mentioned and others which will become apparent hereinafter, are achieved by a centering device as recited in claim 1.

Other features are comprised in the dependent claims.

Further characteristics and advantages will become better apparent from the description of a preferred but not exclusive embodiment of a centering device for bar loaders for automatic lathes, illustrated only by way of non-limitating example in the accompanying drawings, in which:

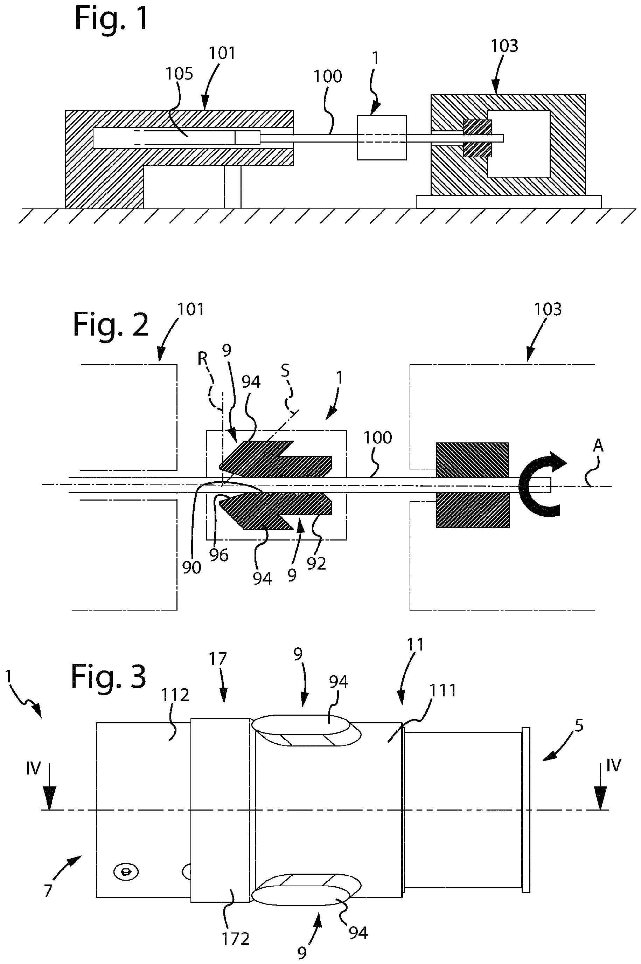

Figure 1 illustrates a diagram of an automated assembly of bar loader and lathe comprising a centering device according to the invention;
Figure 2 illustrates a simplified diagram of the operating elements of the centering device in contact with a bar according to the invention;
Figure 3 is a side elevation view of the centering device according to the invention;

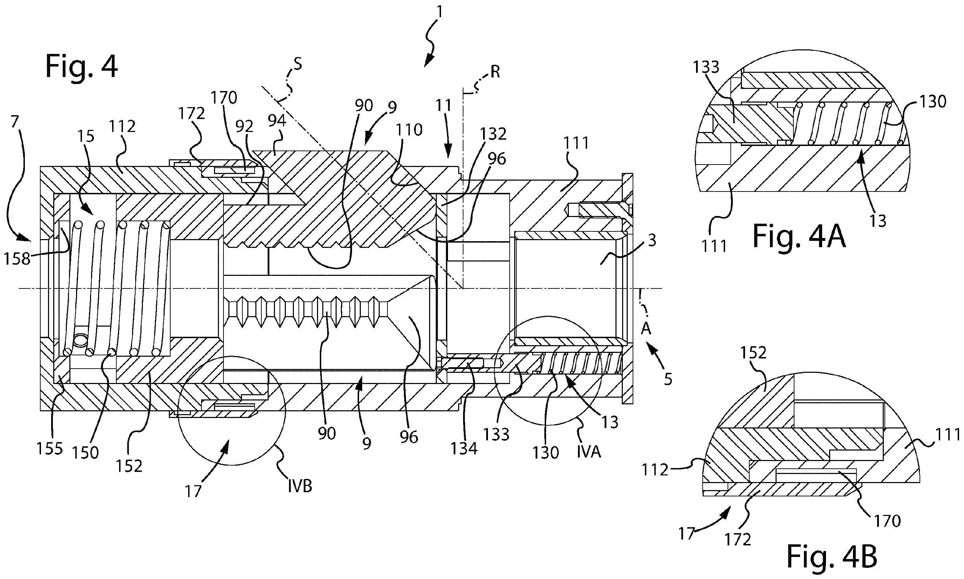

Figure 4 is a sectional view of the centering device represented in Figure 3, taken along the axis IV-IV;
Figure 4A is an enlarged view of the detail of Figure 4 indicated by IVA;
Figure 4B is an enlarged view of the detail of Figure 4 indicated by IVB;
Figure 5A is an exploded perspective view of the centering device according to the invention, illustrating in particular the components from the inlet side of the bar;
Figure 5B is an exploded perspective view of the centering device according to the invention, illustrating in particular the components from the outlet side of the bar;
Figure 5C is an exploded perspective view of some components of a variant of the centering device according to the invention, illustrating in particular the components from the inlet side of the bar;
figures 6 and 7 illustrate two steps of the passage of a bar and of the relative bar pusher through the gripping bodies of the centering device according to the invention;
Figure 8 is a perspective view of a first embodiment of the gripping bodies of the centering device according to the invention;

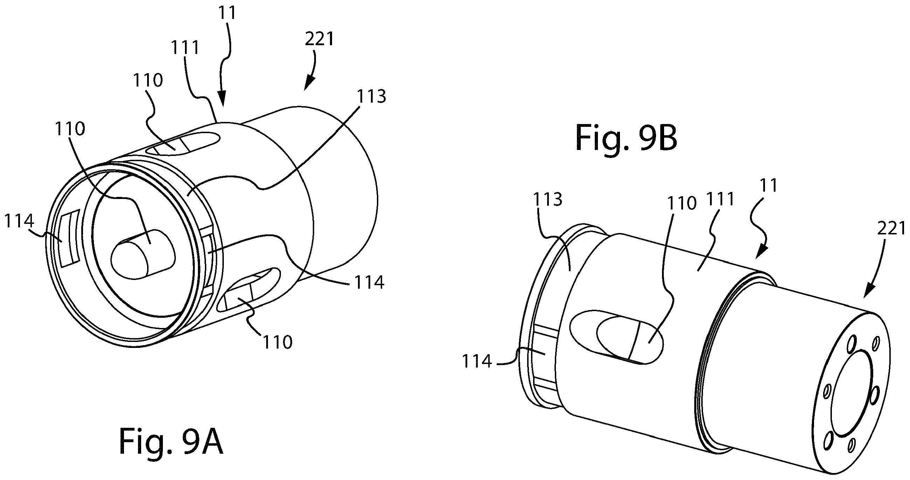

Figures 9A and 9B are two different perspective views of an external component of the centering device according to the invention;
Figure 10 is an exploded perspective view of the components of the quick coupling and release system of the centering device according to the invention;
Figure 11 is a perspective view of the centering device according to the invention, mounted on a support of the bar loader;

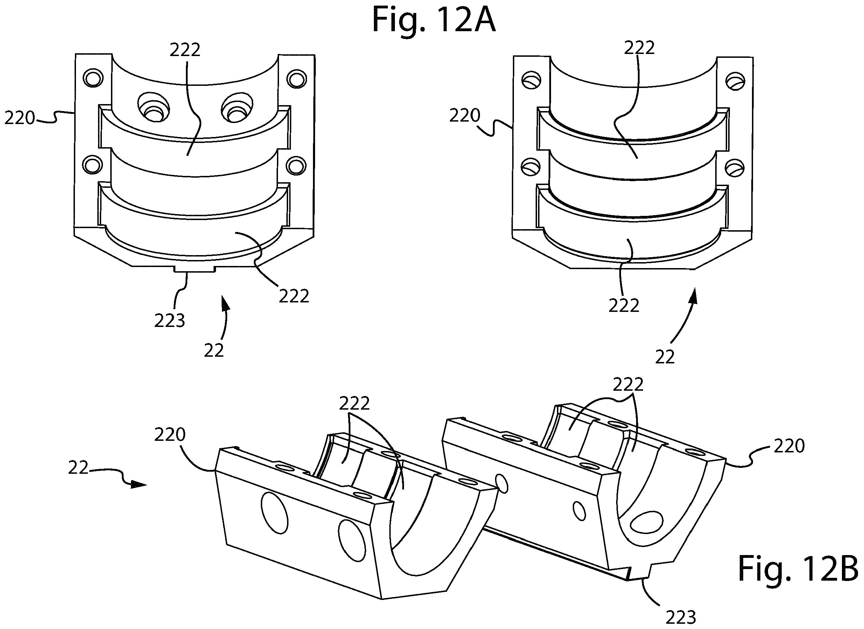

Figures 12A and 12B illustrate, in two different views, the anchoring components of the support of Figure 11;
Figures 13A to 13D illustrate four operating steps of the centering device according to the invention;
Figure 14 is a perspective view of a second embodiment of one of the gripping bodies of the centering device according to the invention;
Figure 15 is an exploded perspective view of the gripping body of Figure 14;
Figure 16 is a bottom plan view of the main body of the second embodiment of the gripping body;
Figure 17 is a front elevation view of the main body of Figure 16;
Figures 18 and 19 are perspective views of two further components of the second embodiment of the gripping body;
Figure 20 is a longitudinal sectional view of the second embodiment of the gripping body, illustrated in Figure 14.

With reference to the above figures, the centering device, particularly for automatic bar loaders for lathes, generally designated by the reference numeral 1, comprises a channel 3 developing along an axial direction A. This channel 3 is intended for the passage of a bar 100 directed from a bar loader 101 to a lathe 103, and of the relative bar pusher 105. The centering device 1 comprises an inlet end 5 for said bar 100 and an outlet end 7 opposite to said inlet end 5. The centering device 1 comprises at least two gripping bodies 9, each of which is housed in a tubular body 11 and is movable with respect to said tubular body 11 along an inclined sliding direction S both with respect to said axial direction A and with respect to a direction R that is radial to said channel 3, to define an adjustable opening for the passage of the bar 100, and of the relative bar pusher 105, in the channel 3.

According to the invention, each of the gripping bodies 9 comprises a first face 90 adapted to engage with the bar 100 and a second face 92 radially opposite to said first face 90. Each of the gripping bodies 9 further comprises a pin 94 projecting from the second face 92 along said inclined sliding direction S. The tubular body 11 comprises at least two guide holes 110, each of which develops along the inclined sliding direction S and is configured to slidably house a pin 94 of a corresponding gripping body 9. The centering device 1 further comprises first elastic means 13, operating substantially along the axial direction A, adapted to counteract the displacement of the gripping bodies 9 toward the inlet end 5 and second elastic means 15, also operating substantially along the axial direction A, adapted to counteract the displacement of the gripping bodies 9 toward the outlet end 7.

Since the gripping bodies 9 can move only along the inclined sliding direction S, the first elastic means 13 and the second elastic means 15 counteract both the axial displacement and the radial displacement of the gripping bodies 9 inside the tubular body 11. Therefore, the first elastic means 13 and the second elastic means 15 allow to absorb and dampen both the axial oscillations or vibrations and the radial oscillations or vibrations of the bar 100 that are transmitted to the gripping bodies 9, which are engaged on the bar 100. Moreover, since elastic means 13 and 15 are provided on both sides, in the axial direction A, of the gripping bodies 9, axial oscillations or vibrations can be absorbed in both directions, and in the same way radial oscillations or vibrations can be absorbed in opposite directions.

In other words, any movement of the bar 100 during its machining entails a movement of the gripping bodies 9, which movement is counteracted by the first elastic means 13 or by the second elastic means 15.

Advantageously, the first elastic means 13 and the second elastic means 15 are adapted to counteract the displacement of the gripping bodies 9 in each operating position assumed by the gripping bodies 9 along the inclined sliding direction S.

In other words, each gripping body 9 can move from a position in which the first face 90 is against the first face 90 of the other gripping bodies 9 (either against the bar 100 or against the bar pusher 105 if they are present in the channel 3) to a position in which the second face 92 abuts against the inner face of the tubular body 11 without being provided, between these two positions, for intermediate positions in order to block the gripping bodies 9, or for elements or devices in order to block the gripping bodies 9 in intermediate blocking positions. In this way, the gripping bodies 9 are substantially always held gripped on the bar 100 or on the bar pusher 105 by the thrust of the first elastic means 13 or of the second elastic means 15. Consequently, the first elastic means 13 and the second elastic means 15 are always in a condition of absorbing the oscillations or vibrations of the bar 100.

Advantageously, the centering device 1 comprises three or more gripping bodies 9 angularly substantially equally distributed around the axial direction A.

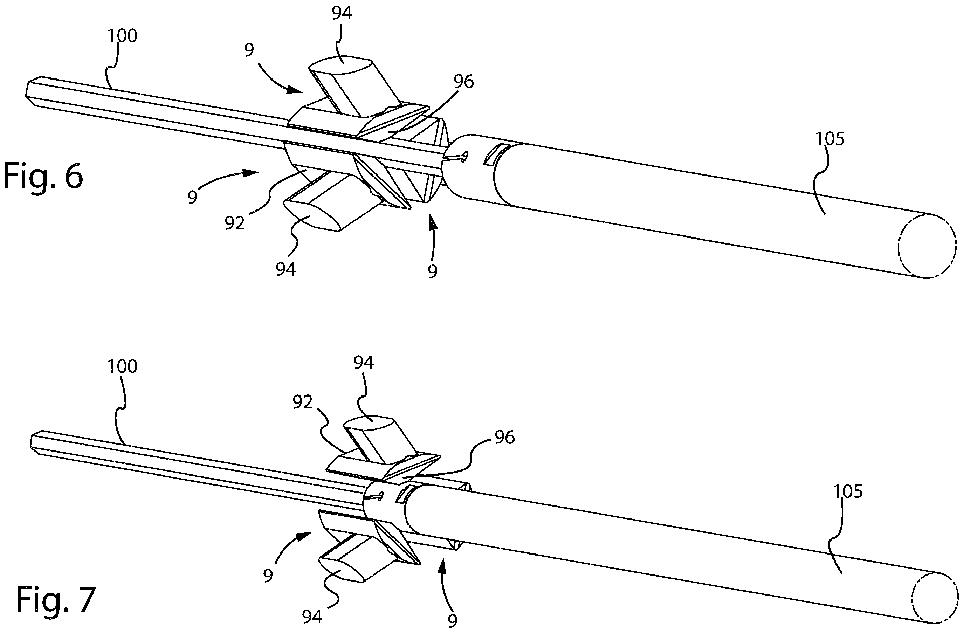

The fact of providing for three or more gripping bodies 9 distributed around the axial direction A makes it possible for the centering device 1 to machine bars 100 having not only circular but also triangular, square, pentagonal, hexagonal, etc. sections. For example, Figures 6 and 7 illustrate an example in which the bar 100 has a hexagonal cross-section.

In the example illustrated in the accompanying figures, the centering device 1 preferably comprises three gripping bodies 9 angularly spaced apart from one another by about 120°.

Advantageously, the first face 90 of the gripping bodies 9 comprises an inclined lead-in surface 96 turned toward the inlet end 5 of the centering device 1. In this way, the axial thrust of the bar 100 and/or of the bar pusher 105 against said inclined lead-in surface 96 causes the displacement of the gripping bodies 9 along the inclined sliding direction S in contrast to the force exerted by the second elastic means 15.

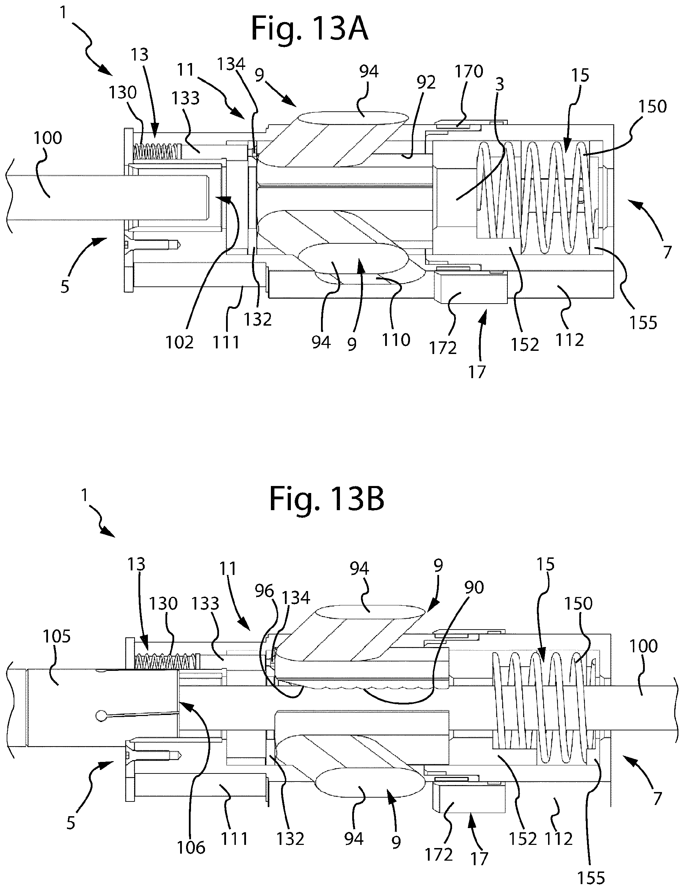

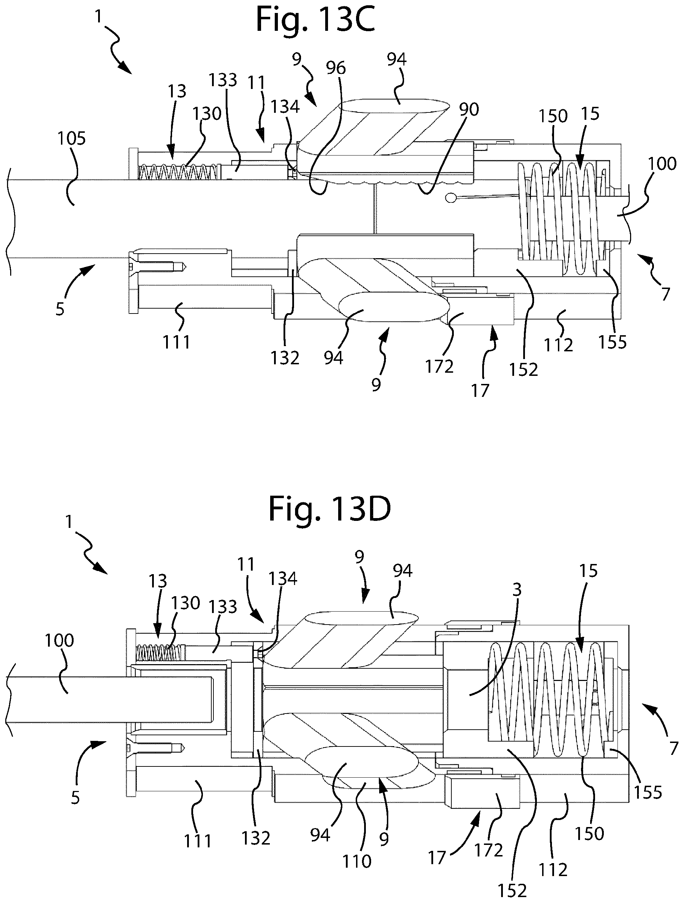

This displacement is evident from the comparison of Figures 13A and 13B with reference to the introduction, in the channel 3, of the bar 100 and then from the comparison of Figures 13B and 13C with reference to the introduction, in the channel 3, of the bar pusher 105.

The above-mentioned lead-in surfaces 96 ensure a lead-in to the bar 100 and/or to the bar pusher 105 in the progressive opening of the channel 3, preventing the possibility of jamming between the gripping bodies 9 and the bar 100 and/or between the gripping bodies 9 and the bar pusher 105 from occurring.

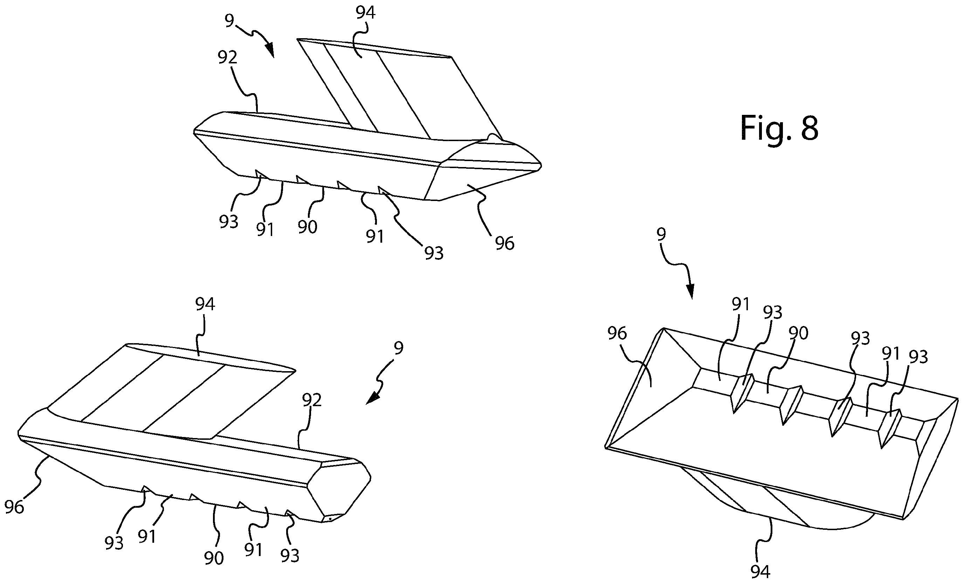

Advantageously, according to a first embodiment of the gripping bodies, illustrated in Figure 8, the first face 90 of the gripping bodies 9 comprises a plurality of projections 91 and/or notches 93 configured to facilitate engagement with the bar 100 and/or with the bar pusher 105. These projections 91 and notches 93 favour, in addition to a homogeneous contact with the bar 100 and/or with the bar pusher 105, also the removal of the dirt generated during the machining of the bar 100.

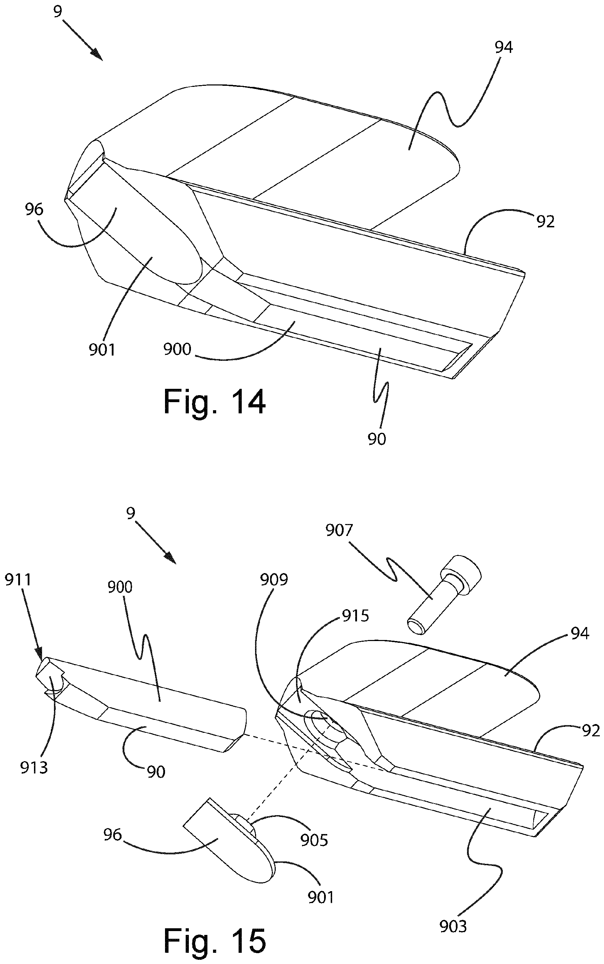

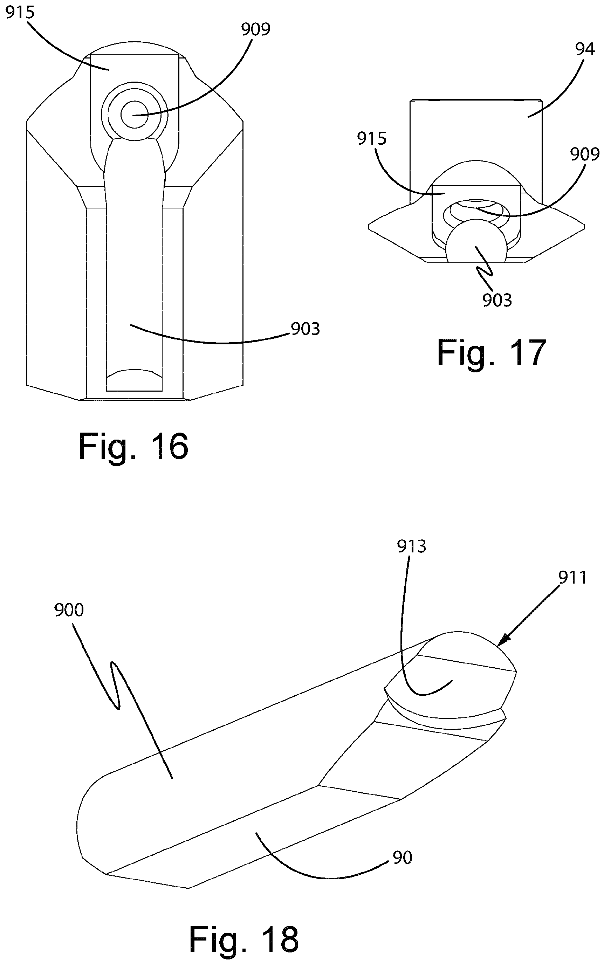

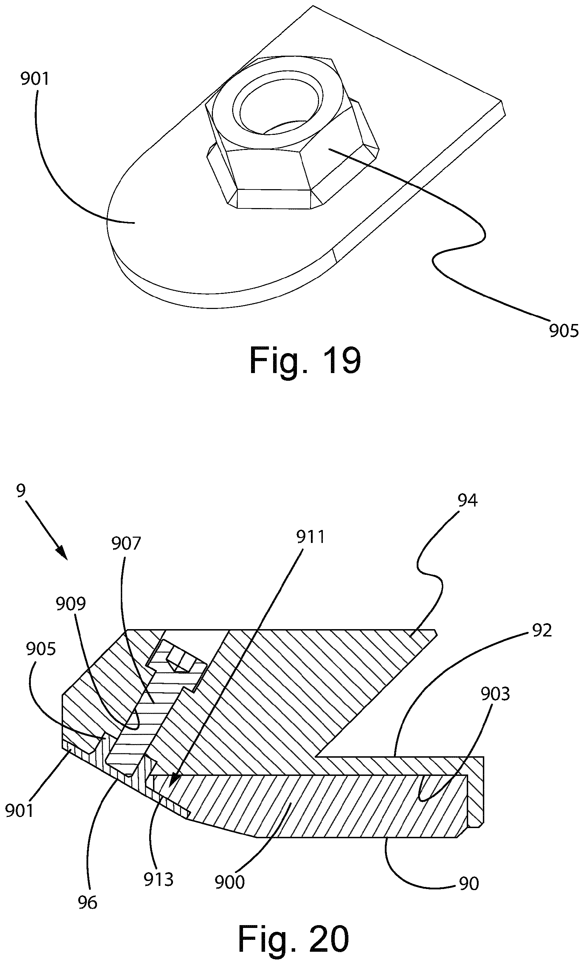

Advantageously, according to a second embodiment of the gripping bodies 9, illustrated with the aid of Figures 14 to 20, each gripping body 9 comprises a removable insert 900, wherein the first face 90 adapted to engage with the bar 100 or with the bar pusher 105 is completely defined by said removable insert 900.

Advantageously, the removable insert 900 is made of a technopolymer.

In this way it is possible to select the removable insert 900, and in particular the material of which it is made, so that it has the most suitable technical characteristics according to the type of material and/or geometry of the bar 100 to be retained.

In particular, it is possible to select a removable insert 900 made of a material specifically adapted to interact with the material of which the bar 100 is made.

Moreover, the possibility of removing the removable insert 900 allows it to be replaced once it is worn, taking into account the fact that the face 90 of the gripping body 9 represents the part thereof that is the most subject to wear.

Moreover, the material of which the removable insert 900 is made can be a vibration-damping material selected so as to further contribute to the absorption of the vibrations of the bar 100.

Optionally, the projections 91 and/or notches 93 described with reference to the first embodiment of the gripping bodies 9 can also be provided on the removable insert 900.

Advantageously, each gripping body 9 comprises a removable plate 901, wherein the inclined lead-in surface 96, turned towards the inlet end 5 of the centering device 1, is at least partially defined by said removable plate 901, and is preferably completely defined by said removable plate 901.

Advantageously, the removable insert 900 is made of hardened steel.

The removable plate 901 has the task of taking charge of the initial contact with the end of the bar 100, which is generally not bevelled, preventing premature, non-uniform wear of the lead-in surface 96. In particular, the removable plate 901 prevents localized and marked wear only in the zone of first contact of the bar 100 which, in the long run, might cause a variation in the thrust angle of the end of the bar 100 against the gripping bodies 9, consequently causing deteriorations of the sliding tolerances among the various components.

Advantageously, the gripping body 9 comprises a seat 903 housing the removable insert 900.

Advantageously, the removable plate 901 comprises a threaded nut 905 rigidly constrained thereto. The removable plate 901 is fixed to the gripping body 9 by means of a bolt 907 inserted inside a through hole 909 obtained in the gripping body 9.

Advantageously, moreover, the removable insert 900 comprises a portion 911 inserted between the removable plate 901 and the gripping body 9, wherein the fixing of the bolt 907 to the nut 905 also entails the removable insert 900 being blocked in the seat 903.

As illustrated in Figures 14 to 20, the removable insert 900 can have an at least partially cylindrical configuration and be housed in a corresponding seat 903 with complementary shape. In order to prevent the relative rotation of the removable insert 900 inside the seat 903, a coupling is made between a slot 913 that is present in the portion 911 of the removable insert 900 that is inserted between the removable plate 901 and the gripping body 9, said slot 913 being of a shape complementary to that of a portion of the removable plate 901, so that the fixing of the removable plate 901 to the gripping body 9 blocks the rotation of the removable insert 900.

Advantageously, the gripping body 9 has a further seat 915 having a shape complementary to that of the removable plate 901.

Advantageously, the gripping bodies 9 have a shape such that, in the absence of the bar 100 and/or of the bar pusher 105, i.e. in idle conditions of the centering device 1, they can approach one another radially closing the channel 3, as illustrated for example in Figures 13A and 13D. For example, if three gripping bodies 9 are present, like in the accompanying figures, each gripping body 9 has a substantially trapezoidal cross-section, with an angle at the centre of about 120° or less.

Advantageously, the tubular body 11 comprises a first tubular element 111 and a second tubular element 112 which can be mutually coupled and released from one another by means of quick coupling and release means 17. In this way, by separating the two tubular elements 111 and 112 with quick coupling and release means 17, it is possible to perform maintenance quickly on the internal components of the centering device 1, for example to replace the gripping bodies 9.

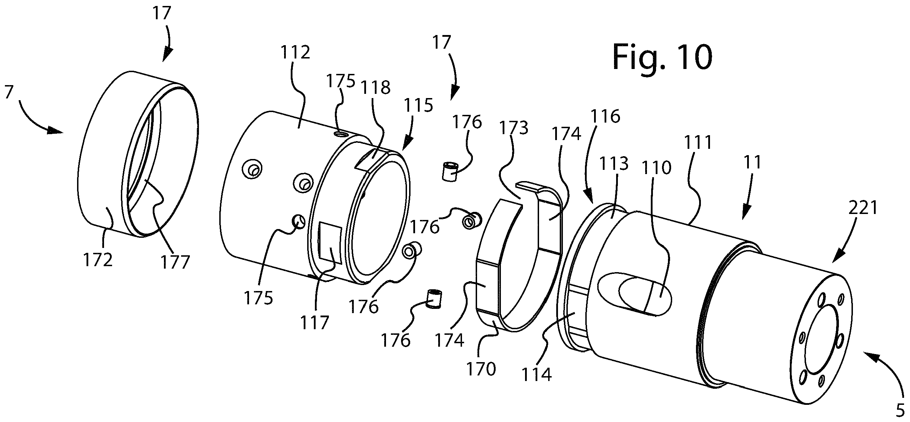

Advantageously, as illustrated in particular in Figure 10, the quick coupling and release means 17 comprise an elastic ring 170 configured to block the first tubular element 111 with respect to the second tubular element 112 in a blocking configuration. Said quick coupling and release means 17 further comprising a safety bush 172 configured to block said elastic ring 170 in said blocking configuration.

In this way the elastic ring 170 allows to block the two tubular elements 111 and 112 together, and the safety bush 172 allows to retain the elastic ring 170 in the blocking configuration.

Advantageously, the elastic ring 170 is elastically deformable thanks to the presence of an open cross-section 173, or crack.

Advantageously, the elastic ring 170 comprises at least one flat portion 174, and preferably a pair of opposing flat portions 174.

Advantageously, the first tubular element 111 of the tubular body 11 comprises an annular seat 113 housing the elastic ring 170. Advantageously, in said annular seat 113 there is provided at least one through hole 114, and preferably a pair of through holes 114, into which the flat portions 174 of the elastic ring 170 are inserted. In this way, the flat portions 174 of the elastic ring 170 project radially inside the first tubular element 11, through the aforesaid through holes 114.

Advantageously, the second tubular element 112 of the tubular body 11 comprises a cylindrical end 115 which can be inserted in a cylindrical end 116 of the first tubular element 111.

Said second tubular element 112 comprises a flat portion 117, and preferably a pair of opposing flat portions 117, adapted to engage, when the second tubular element 112 is inserted in the first tubular element 111, with the flat portions 174 of the elastic ring 170 projecting radially toward the inside of the first tubular element 111 through the through holes 114.

Advantageously, on the peripheral edge of the cylindrical end 115 of the second tubular element 112 it might be provided for a flat lead-in surface 118, and preferably a pair of flat lead-in opposing surfaces 118, arranged staggered both radially and axially with respect to the flat portions 117. These flat lead-in surfaces 118 are adapted to facilitate the insertion of the end 115 of the second tubular element 112 inside the first tubular element 111.

The insertion of the second tubular element 112 inside the first tubular element 111 can in fact be made by first aligning the flat lead-in surfaces 118 of the second tubular element 112 with the flat portions 174 of the elastic ring 170. When the second tubular element 112 is completely inserted in the first tubular element 111, a rotation of the second tubular element 112 brings its flat portions 117 into engagement with the flat portions 174 of the elastic ring 170, thus blocking in this way the two tubular elements 111 and 112 the one with respect to other.

The safety bush 172 is slidable around the second tubular element 112 and is configured to be fitted over the first tubular element 111 at the annular seat 113, in order to block the possible expansion of the elastic ring 170.

Advantageously, a plurality of elastic blocking means are provided between the second annular element 112 and the safety bush 172, which prevent the axial extraction of the safety bush 172.

In particular, a plurality of seats 175 housing a plurality of ball spring elements 176 are obtained on the outer surface of the second tubular element 112. An annular groove 177 where the balls of the ball spring elements 176 are inserted is obtained inside the safety bush 172. They are in fact pushed radially by the springs inside the aforesaid annular groove 177.

The safety bush 172 can be extracted axially only by exerting a force such as to compress the springs of the ball spring elements 176 so that the relative balls come out of the annular groove 177.

Advantageously, the first elastic means 13 comprise at least one spring 130, 131 associated with a first annular pushing body 132 abutting against the gripping bodies 9.

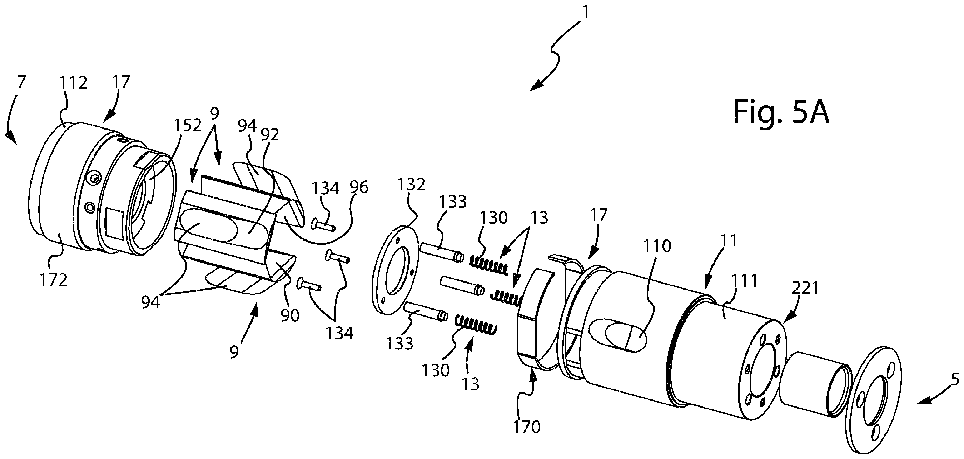

Advantageously, as illustrated in particular in Figure 5A, the first elastic means 13 comprise a plurality of springs 130 distributed around the channel 3. Each spring 130 is associated with a pin 133 screwed, by means of a respective screw 134, to the first annular pushing body 132.

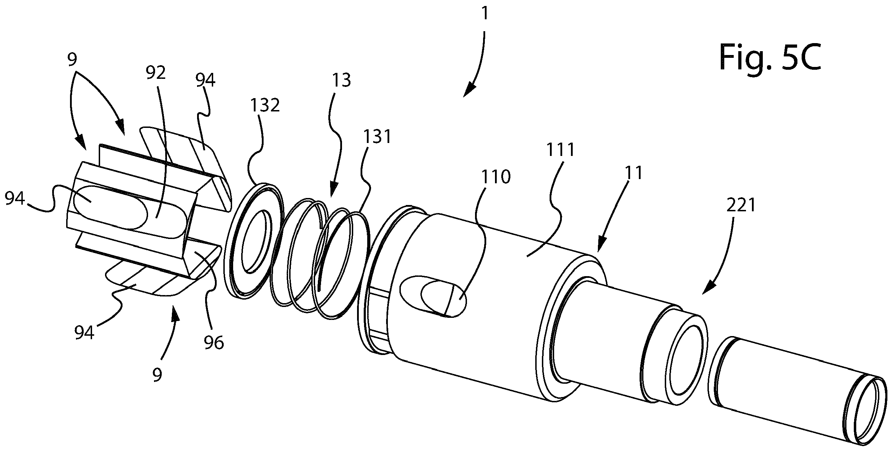

In the variant illustrated in Figure 5C, the first elastic means 13 comprise a single spring 131, arranged around the channel 3.

Advantageously, the second elastic means 15 comprise at least one spring 150 associated with a second annular pushing body 152 abutting against said at least two gripping bodies 9.

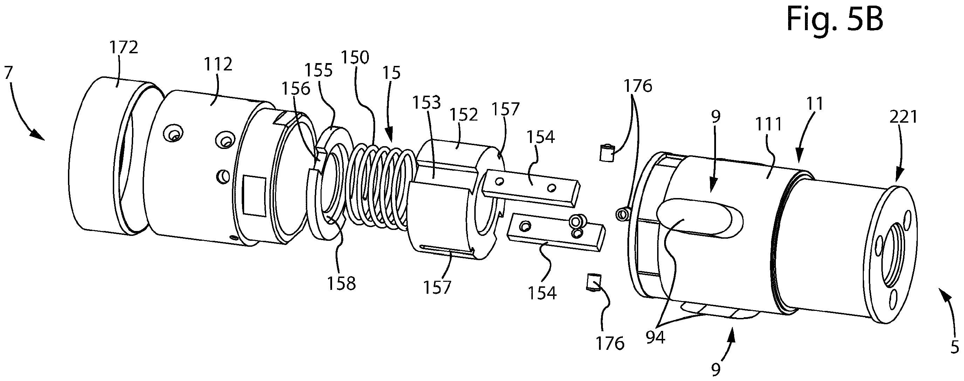

Advantageously, as illustrated in Figure 5B, the second annular pushing body 152 has at least one axial slot 153, and preferably a pair of axial slots 153. Advantageously, inside the first tubular element 111 of the tubular body 11 there is fixed at least one slider 154, and preferably a pair of opposing sliders 154, adapted to slide inside the axial slots 153 obtained on the second annular pushing body 152, relative to the same. The engagement of the sliders 154 in the axial slots 153 acts as a support in the transmission of the rotation motion during the rotation of the bar 100.

Advantageously, the spring 150 lies between the second annular pushing body 152 and an abutment ring 155 located inside the second tubular element 112. Said abutment ring 155 advantageously comprises an annular cavity 158 inside which an end of the spring 131 is arranged, so as to prevent the torsion thereof during the operation of the centering device 1.

Advantageously, also the abutment ring 155 comprises one or two slots 156 adapted to engage with the sliders 154.

Advantageously, the second annular pushing body 152 comprises at least one axial groove 157, and preferably a pair of axial grooves 157, which by engaging with corresponding pins acting as sliders, cause the maximum travel of the second annular pushing body 152 with respect to the second tubular element 112 when it is disassembled from the first tubular element 111, for example during maintenance of the centering device 1.

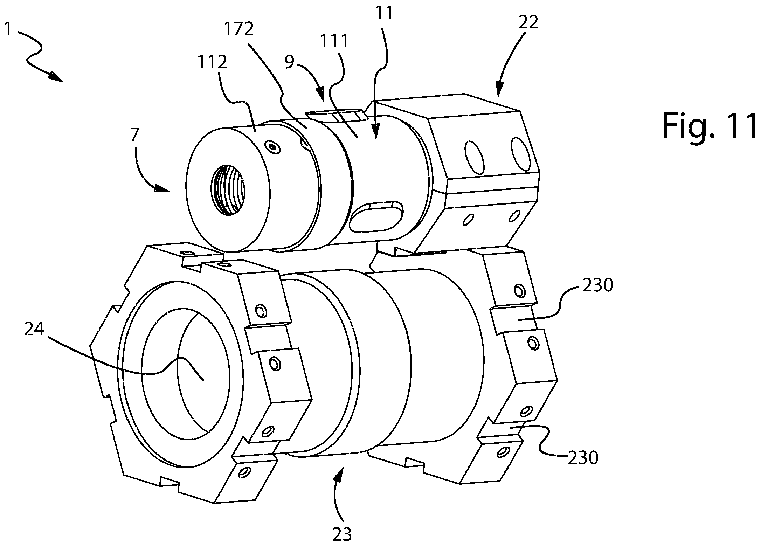

As illustrated in Figure 11, the centering device 1 can be mounted, by means of a cradle-like anchoring device 22, on a support member 23 located between the bar loader 101 and the lathe 103 and fitted, through the hole 24, on a central anchoring shaft, not illustrated, which supports the support member 23 as well as the centering device 1.

Advantageously, the anchoring device 22 comprises a pair of half-shells 220 configured to contain an end 221 of the first tubular element 111 of the tubular body 11. Advantageously, seats 222 are formed inside the half-shells 220 and are adapted to house rotating members, not illustrated, such as for example ball bearings, which rotating members rotatably support the centering device 1.

Advantageously, one of the two half-shells 220 comprises a projecting tang 223 adapted to be inserted in a corresponding seat 230 obtained on the support member 23.

The present invention also relates to a bar loader for lathes 101 for feeding bars 100 to a lathe 103, comprising a centering device 1 as described above.

The operation of the centering device is clear from what has been described.

In particular, Figures 13A to 13D illustrate four operating steps of the centering device 1.

In the first step, illustrated in Figure 13A, the bar 100 is external to the centering device 1. The gripping bodies 9 are pushed by the second elastic means 15 toward the inlet end 5 and therefore close the channel 3.

As the bar 100 advances into the channel 3, as illustrated in Figure 13B, the end 102 thereof presses against the inclined lead-in surfaces 96 of the gripping bodies 9, pushing them backwards and, thanks to the presence of the inclined pin 94, moving them away from each other. This retraction and opening of the gripping bodies 9 take place against the force of the second elastic means 15.

Figure 13C illustrates the further retraction and opening of the gripping bodies 9, imposed by the passage of the bar pusher 105, which, having a diameter greater than the diameter of the bar 100, further pushes, with its end 106, the gripping bodies 9.

Finally, as illustrated in Figure 13D, if the bar 100 is extracted from the centering device 1, the gripping bodies 9 return to their advanced and closed position, thanks to the thrust of the second elastic means 15.

The machining of the bar 100 can take place in the situation illustrated in Figure 13B or in Figure 13C. In both situations, the first elastic means 13 and the second elastic means 15 press, from opposite directions, against the gripping bodies 9.

Any vibration of the bar 100, both axial and radial, is transmitted to the gripping bodies 9 and is damped by the elastic means 13 and 15 opposing each other. In other words, the centering device 1 allows the bar 100 to "ease up" inside the channel 3, thus stabilizing the oscillations it generates during machining and thus preventing them from being transmitted to the machining point inside the lathe 103.

Advantageously, the centering device 1 can operate also in the presence of lubricating material which lubricates the movements of the gripping bodies 9 inside the tubular body 11. Advantageously, it is also possible for the centering device 1 to operate in an oil bath by means of a lubrication circuit.

In practice it has been found that the centering device, according to the present invention, achieves the intended task and objects, since it allows to significantly reduce the vibrations of the bar during machining.

Another advantage of the centering device, according to the invention, consists in defining a channel for the passage of the bar with adjustable and progressive opening, which can not only enable the passage of the bar pusher, but also adapt to bars with cross-sections of different shapes and sizes, without requiring interventions for replacement of components, and thus zeroing machine downtime.

A further advantage of the centering device, according to the invention, consists in the fact that it can be easily disassembled and reassembled, for example to replace the gripping bodies, which are subject to greater wear, reducing to a minimum the machine downtime.

Yet another advantage of the centering device, according to the invention, consists in the fact that it does not require any actuator to block the bar in the gripping bodies, nor any manual adjustment, since the presence of the mutually opposing elastic means allows to generate, dynamically, a constant pressure of the gripping bodies on the sides of the bar both during the machining of the bar and between one machining operation and the other, upon the insertion of the bar in the centering device, since the latter can in fact adapt itself and receive bars of different sizes and/or geometries and/or materials, without any preventive intervention by the user.

A further advantage of the centering device consists in the fact that the synergy of the elastic means opposing the gripping bodies allows to modulate the gripping thrust on the sides of the bar even when, during high speed machining, the rotational inertia would cause the gripping bodies to migrate outwards, thus preventing the risk of slackening of the gripping force on the bar and consequently ensuring adequate retention of the bar in any situation.

The centering device, particularly for automatic bar loaders for lathes, thus conceived is susceptible of numerous modifications and variations, all of which are within the scope of the inventive concept.

Furthermore, all the details can be replaced by other technically equivalent elements.

In practice, any materials can be used according to requirements, as long as they are compatible with the specific use, the dimensions and the contingent shapes.

## Claims

1. Centering device (1), particularly for automatic bar loaders for lathes, comprising a channel (3) developing along an axial direction (A), said channel (3) being intended for the passage of a bar (100) directed from a bar loader (101) to a lathe (103), and of the relative bar pusher (105), said centering device (1) comprising an inlet end (5) for said bar (100) and an outlet end (7) for said bar (100), opposite to said inlet end (5), said centering device (1) comprising at least two gripping bodies (9), each of said at least two gripping bodies (9) being housed in a tubular body (11) and being movable with respect to said tubular body (11) along an inclined sliding direction (S) both with respect to said axial direction (A) and with respect to a direction (R) that is radial to said channel (3), to define an adjustable opening for the passage of said bar (100) in said channel (3),
**characterized in that** each of said at least two gripping bodies (9) comprises a first face (90) adapted to engage with said bar (100) and a second face (92) radially opposite to said first face (90), each of said at least two gripping bodies (9) comprising a pin (94) projecting from said second face (92) along said inclined sliding direction (S), said tubular body (11) comprising at least two guide holes (110), each of said at least two guide holes (110) developing along said inclined sliding direction (S) and being configured to slidably house a pin (94) of a corresponding gripping body (9), said centering device (1) further comprising first elastic means (13), operating substantially along said axial direction A, adapted to counteract the displacement of said at least two gripping bodies (9) toward said inlet end (5) and second elastic means (15), operating substantially along said axial direction A, adapted to counteract the displacement of said at least two gripping bodies (9) toward said outlet end (7).

2. Centering device (1), according to claim 1, **characterized in that** said first elastic means (13) and said second elastic means (15) are adapted to counteract the displacement of said at least two gripping bodies (9) in each operating position assumed by said at least two gripping bodies (9) along said inclined sliding direction (S).

3. Centering device (1), according to claim 1 or 2, **characterized in that** it comprises three or more gripping bodies (9) angularly substantially equally distributed around said axial direction (A).

4. Centering device (1) according to one or more of the preceding claims, **characterized in that** said first face (90) of said at least two gripping bodies (9) comprises an inclined lead-in surface (96) turned toward said inlet end (5), the axial thrust of said bar (100) and/or of said bar pusher (105) against said inclined lead-in surface (96) causing the displacement of said at least two gripping bodies (9) along said inclined sliding direction (S) in contrast to the force exerted by said second elastic means (15).

5. Centering device (1), according to one or more of the preceding claims, **characterized in that** said first face (90) of said at least two gripping bodies (9) comprises a plurality of projections (91) and/or notches (93) configured to facilitate the engagement with said bar (100) and/or with said bar pusher (105).

6. Centering device (1) according to one or more of the preceding claims, **characterized in that** each of said at least two gripping bodies (9) comprises a removable insert (900), wherein said first face (90) of each of said at least two gripping bodies (9) is completely defined by said removable insert (900).

7. Centering device (1) according to one or more of the preceding claims, **characterized in that** each of said at least two gripping bodies (9) comprises a removable plate (901), wherein said inclined lead-in surface (96) turned toward said inlet end (5) of each of said at least two gripping bodies (9) is at least partially defined by said removable plate (901).

8. Centering device (1), according to claim 6 or 7, **characterized in that** each of said at least two gripping bodies (9) comprises a seat (903) housing said removable insert (900).

9. Centering device (1) according to claim 7, **characterized in that** said removable plate (901) comprises a threaded nut (905), said removable plate (901) being fixed to a respective gripping body (9) through a bolt (907) inserted inside a through hole (909) obtained in said gripping body (9).

10. Centering device (1), according to claim 8, **characterized in that** said removable insert (900) comprises a portion (911) inserted between said removable plate (901) and the respective gripping body (9), wherein the fixing of said bolt (907) to said nut (905) also entails said removable insert (900) being blocked in said seat (903).

11. Centering device (1), according to one or more of the preceding claims, **characterized in that** said tubular body (11) comprises a first tubular element (111) and a second tubular element (112) that can be mutually coupled and released from one another by means of quick coupling and release means (17).

12. Centering device (1), according to claim 11, **characterized in that** said quick coupling and release means (17) comprise an elastic ring (170) configured to block said first tubular element (111) with respect to said second tubular element (112) in a blocking configuration, said quick coupling and release means (17) further comprising a safety bush (172) configured to block said elastic ring (170) in said blocking configuration.

13. Centering device (1), according to one or more of the preceding claims, **characterized in that** said first elastic means (13) comprise at least one spring (130, 131) associated with a first annular pushing body (132) abutting against said at least two gripping bodies (9).

14. Centering device (1), according to one or more of the preceding claims, **characterized in that** said second elastic means (15) comprise at least one spring (150) associated with a second annular pushing body (152) abutting against said at least two gripping bodies (9).

15. Bar loader for lathes (101) for feeding bars (100) to a lathe (103), **characterized in that** it comprises a centering device (1) made according to one or more of the preceding claims.
